# EUROPÄISCHE PATENTANMELDUNG

(11) **EP 2 924 149 A1**
(43) Veröffentlichungstag der Anmeldung: **30.09.2015**
(21) Anmeldenummer: 14161253.1
(22) Anmeldetag: 24.03.2014
(51) Int. Cl.: C25B 15/00, C25B 1/04

(54) **Unterbrechungsfreie Stromversorgung einer Elektrolyseanlage**

(71) Anmelder: Siemens Aktiengesellschaft, 80333 München (DE)
(72) Erfinder: Herold, Jochen, 96260 Weismain (DE)

(57) **Zusammenfassung**

Die Erfindung betrifft ein Verfahren zur unterbrechungsfreien Stromversorgung einer Elektrolyseanlage (2) nach einem Ausfall der Stromversorgung (10) und eine Elektrolyseanlage (2) mit einem Elektrolysestack (4). Gemäß dem Verfahren wird die Elektrolyseanlage (2) nach dem Ausfall der Stromversorgung (10) aus einem in der Elektrolyseanlage (2) vorhandenen Energiepotential (20) unterbrechungsfrei ersatzweise mit Strom versorgt, wobei das in der Elektrolyseanlage (2) vorhandene Energiepotential (20) kontrolliert abgebaut wird. Die Anordnung weist Steuereinheit (18) auf, die zur Steuerung des erfindungsgemäßen Verfahrens vorbereitet ist.

## Beschreibung

Die Erfindung betrifft ein Verfahren zur unterbrechungsfreien Stromversorgung einer Elektrolyseanlage nach einem Ausfall einer Stromversorgung und eine Elektrolyseanlage mit einem Elektrolysestack.

Elektrolyseanlagen sind elektro-chemische Anlagen zur Umwandlung von Wasser und elektrischem Strom in Wasserstoff und Sauerstoff.

Insbesondere für die Energiegewinnung aus regenerativen Energiequellen besitzen Elektrolyseanlagen eine zunehmend wichtige technische Bedeutung. Beispielsweise kann überschüssige Wind- oder Solarenergie zur Herstellung von Wasserstoff mittels Elektrolyse genutzt werden. Der Wasserstoff kann hiernach bedarfsgerecht und unabhängig von Wind- oder Sonnenverhältnissen als Energieträger zur Energierückgewinnung verwendet werden. Dadurch kann eine aus technischen und wirtschaftlichen Gründen erforderliche Verstetigung der naturgemäß diskontinuierlichen regenerativen Energiegewinnung erreicht werden.

Sämtlichen Verfahrensvarianten der Wasserelektrolyse ist gemein, dass die eingesetzten Elektrolyseanlagen bei einem Ausfall der Stromversorgung in einen unkontrollierten Betriebszustand geraten können. Dies ist beispielsweise der Fall, wenn betriebsnotwendige Aggregate wie Pumpen, Steuergeräte, Gleichrichter bzw. elektrische Komponenten nicht mehr mit Strom versorgt werden und plötzlich still stehen.

Aus sicherheitstechnischen Gründen zum Schutz der Anlage, der Umwelt und des Betriebspersonals ist dies zu vermeiden. Beispielsweise kann hierfür eine unterbrechungsfreie Stromversorgung der Elektrolyseanlage implementiert werden, welche nach einem Ausfall der eigentlichen Stromversorgung diese dann weiter mit Strom versorgt.

Aus dem Stand der Technik sind verschiedene Verfahren zur unterbrechungsfreien Stromversorgung einer Elektrolyseanlage nach einem Ausfall der Stromversorgung bekannt.

Bei einem bekannten Verfahren wird die Elektrolyseanlage nach einem Ausfall der Stromversorgung durch eine batteriegestützte Energie- bzw. Stromquelle mit Strom versorgt. Bei einem anderen bekannten Verfahren wird anstelle der batteriegestützten Energiequelle eine kondensatorgestützte Energiequelle zur unterbrechungsfreien Stromversorgung der Elektrolyseanlage verwendet.

Es ist eine Aufgabe der Erfindung eine vorteilhafte Lehre zur unterbrechungsfreien Stromversorgung einer Elektrolyseanlage nach einem Stromausfall anzugeben. Insbesondere liegt der Erfindung die Aufgabe zu Grunde, eine aufwands- und wartungsgünstige sowie sicherheitstechnisch vorteilhafte unterbrechungsfreie Stromversorgung einer Elektrolyseanlage zu realisieren.

Diese Aufgabe wird erfindungsgemäß gelöst mit einem Verfahren zur unterbrechungsfreien Stromversorgung einer Elektrolyseanlage und eine Elektrolyseanlage mit einem Elektrolysestack mit den Merkmalen des jeweiligen unabhängigen Anspruchs. Zweckmäßige Ausgestaltungen und Vorteile der Erfindung ergeben sich aus den weiteren Ansprüchen und der Beschreibung und beziehen sich auf das Verfahren und die Elektrolyseanlage.

Bei dem Verfahren wird die Elektrolyseanlage nach dem Ausfall der Stromversorgung der Elektrolyseanlage aus einem in der Elektrolyseanlage vorhandenen Energiepotential ersatzweise mit Strom versorgt, wobei das in der Elektrolyseanlage vorhandene Energiepotential kontrolliert abgebaut wird.

Die Erfindung beruht - vereinfacht ausgedrückt - auf der Idee, dass zum Zeitpunkt des Ausfalls der Stromversorgung der Elektrolyseanlage ein in der Elektrolyseanlage selbst vorhandenen Energiepotential genutzt wird, um die Stromversorgung der Elektrolyseanlage (nach Möglichkeit unterbrechungsfrei) aufrecht zu erhalten. Das in der Elektrolyseanlage vorhandene Energiepotential wird so kontrolliert zu weiteren Stromversorgung der Elektrolyseanlage eingesetzt, wobei dieses Energiepotential dadurch kontrolliert abgebaut wird.

Das in der Elektrolyseanlage vorhandene Energiepotential kann derart kontrolliert abgebaut werden, dass eine Energie aus dem Potential entnommen und gezielt zur Stromversorgung der Elektrolyseanlage bzw. derer Anlagenteile verwendet wird. Kontrolliert kann auch bedeuten, dass das Energiepotential technisch beeinflussbar nach Zeit, Menge, Ort oder Herkunft abgebaut wird. Der kontrollierte Abbau geschieht beispielsweise nach einer vorgebbaren Abfolge der verschiedenartigen Energiepotentiale, einer vorgebbaren Entnahmemenge der Energie oder einer vorgebbaren Zeit bis zu einem nahezu vollständigen Abbau des Energiepotentials.

So kann eine sicherheitstechnisch besonders vorteilhafte unterbrechungsfreie Stromversorgung realisiert werden, da ein nach dem Ausfall der Stromversorgung üblicherweise für die Umwelt und das Betriebspersonal vorhandenes Gefahrenpotential, beispielsweise in Form einer Spannung oder eines Überdruckes, kontrolliert abgebaut wird. Von besonderem Vorteil kann so eine Beeinträchtigung oder Gefährdung des Betriebspersonals und der Umwelt vermieden werden.

Der Ausfall der Stromversorgung kann eine beabsichtigte oder eine unbeabsichtigte Unterbrechung der Stromversorgung sein. Der Ausfall der Stromversorgung wird typischerweise durch einen Netzausfall, einen anderweitig störungsbedingten Stromausfall oder eine wartungs- oder betriebsbedingte Abschaltung der Stromversorgung der Elektrolyseanlage bzw. zumindest eines Elektrolysestacks der Elektrolyseanlage bewirkt.

Das in der Elektrolyseanlage vorhandene Energiepotential kann ein chemisches, elektro-chemisches, elektrisches, mechanisches bzw. druckbasiertes Energiepotential sein bzw. sich aus mehreren solcher verschiedenartiger Energiepotentiale zusammensetzen. Beispielsweise ist ein Energiepotential in einem Elektrolysestack oder einen anderen Anlagenteil der Elektrolyseanlage, vorteilhafterweise in einem Druckbehälter, in Form von druckbeaufschlagten Betriebsgasen (Wasserstoff, Sauerstoff) vorhanden. Ein weiteres Energiepotential kann in Form eines elektro-chemischen bzw. chemischen Potentials in der Elektrolyseanlage vorhanden sein. Das elektro-chemische bzw. chemische Energiepotential liegt beispielsweise in Gestalt eines reaktionsfähigen Gaspolsters eines Betriebsgases, insbesondere Wasserstoffs, vor, welches an einer Elektrode oder einer Polymerelektrolytmembran der Elektrolyseanlage anhaftet und durch Umkehrung eines Funktionsprinzips der Elektrolyseanlage (d.h. Betrieb als Brennstoffzelle) in einen elektrischen Strom umwandelbar ist. Außerdem kann ein Energiepotential in Form von elektrischer Energie in elektrischen oder elektronischen Komponenten der Elektrolyseanlage, beispielsweise in einem Gleichrichter bzw. dessen kapazitiven Bauelementen, vorhanden sein.

Die Elektrolyseanlage wird nach dem Ausfall der Stromversorgung ersatzweise aus dem vorhandenen Energiepotential mit Strom versorgt, d.h. es wird eine Ersatzstromversorgung erreicht. Die Elektrolyseanlage wird bevorzugt aus dem vorhandenen Energiepotential unterbrechungsfrei mit Strom versorgt. Unterbrechungsfrei bedeutet im gegebenen Zusammenhang zumindest nahezu unterbrechungsfrei. Zwischen dem Ausfall der Stromversorgung und einem Einsetzen der unterbrechungsfreien Stromversorgung kann eine zeitlich begrenzte, betriebs- und sicherheitstechnisch unerhebliche Unterbrechung der Stromversorgung eintreten. Zweckmäßigerweise erfolgt die Stromversorgung nach einer Wandlung des Energiepotentials in elektrische Energie, sofern nicht ein elektrisches Energiepotential genutzt wird.

Von besonderem Vorteil kann so eine aufwandsgünstige unterbrechungsfreie Stromversorgung realisiert werden, da auf üblicherweise eingesetzte batterie- oder kondensatorgestützte Energiequellen zur unterbrechungsfreien Stromversorgung von Elektrolyseanlagen und deren Wartung bzw. turnusmäßigen Ersatz verzichtet werden kann.

Außerdem von Vorteil wird ein üblicherweise von einer batteriegestützten unterbrechungsfreien Stromversorgung ausgehendes Brandrisiko ausgeschlossen. Des Weiteren von Vorteil kann so eine üblicherweise in ihrem Energiepotential beschränkte kapazitive Stromversorgung zumindest weniger leistungsstark dimensioniert werden, was mit Kosteneinsparungen einhergeht. Ferner von Vorteil wird so eine besonders wartungsgünstige unterbrechungsfreie Stromversorgung realisiert, da zu deren Bewirkung keine wartungsaufwändigen zusätzlichen Anlagenkomponenten notwendig sind. Darüber hinaus vorteilhaft sind keine umfangreichen zusätzlichen Anlagenkomponenten zur Realisierung unterbrechungsfreien Stromversorgung notwendig, so dass eine besondere bauraumgünstige Lösung erreicht werden kann. Ein komplementäres Vorhandensein zweier Stromversorgungen, beispielsweise einer kapazitiven und einer aus dem Energiepotential der Elektrolyseanlage gespeisten Stromversorgung, ist ebenfalls möglich.

Die Erfindung sieht außerdem eine Elektrolyseanlage mit einem Elektrolysestack und einer Steuereinheit vor. Die Steuereinheit ist zu einer Ansteuerung von zumindest einem Verbraucher der Elektrolyseanlage zu einer Stromaufnahme aus einem Energiepotential der Elektrolyseanlage eingerichtet.

Zweckmäßigerweise ist der Verbraucher eine elektrische oder elektronische Komponente, welche für einen sicherheitstechnisch unbedenklichen Betrieb- bzw. Weiterbetrieb oder auch eine kontrollierte Außerbetriebnahme der Elektrolyseanlage relevant ist. Beispielsweise ist der zumindest eine Verbraucher eine elektrisch betätigtes Ablassventil zum Abbau eines Druckes innerhalb der Elektrolyseanlage. Der Verbraucher kann auch ein Anzeigeelement zur Visualisierung des in der Elektrolyseanlage vorhandenen Energiepotentials bzw. eines Gefährdungspotentials der Elektrolyseanlage sein. So kann vorteilhafterweise ein kontrollierter Druckabbau und eine erhöhte Sicherheit des Bedienpersonals und der Umwelt erreicht werden.

Bevorzugte Weiterbildungen der Erfindung ergeben sich auch aus den abhängigen Ansprüchen. Die Weiterbildungen beziehen sich sowohl auf das erfindungsgemäße Verfahren wie auch auf die erfindungsgemäße Elektrolyseanlage.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In einer vorteilhaften Ausgestaltung wird die Ersatzstromversorgung zumindest zeitweise aus einem elektro-chemischen Energiepotential, welches in einem Elektrolysestack der Elektrolyseanlage vorhanden ist, gespeist, wobei der Elektrolysestack zumindest zeitweise als Brennstoffzelle zur Ersatzstromversorgung und zum Abbau des Energiepotentials betrieben wird.

Das elektro-chemische Energiepotential kann in einem an einer Elektrode bzw. an einer Polymerelektrolytmembran des Elektrolysestacks anliegenden Wasserstoff-Wasser-Gemisch enthalten sein. Nach dem Ausfall der Stromversorgung kann so ein elektrischer Strom durch eine elektro-chemische Reaktion des Wasserstoff-Wasser-Gemisches an der Elektrode bzw. Polymerelektrolytmembran zur Speisung der Ersatzstromversorgung generiert werden. D.h. der Elektrolysestack wird temporär, bis zur Aufzehrung des anliegenden Wasserstoff-Wasser-Gemisches, als Brennstoffzelle betrieben. Auf diese Weise kann eine besonders aufwands- und wartungsgünstige unterbrechungsfreie Stromversorgung in Form einer sog. Selbsterhaltung der Elektrolyseanlage erreicht werden. Weiterhin vorteilhaft wird so ein von dem Wasserstoff-Wasser-Gemisch ausgehendes Gefährdungspotential, welches sich aus der Explosionsgefahr des Gemisches ergibt, minimiert. Folglich wird von besonderem Vorteil eine erhöhte Sicherheit für das Bedienpersonal, die Umwelt und die Elektrolyseanlage selbst erzielt.

In einer weiteren Ausgestaltung wird die Ersatzstromversorgung zumindest zeitweise aus einem elektrischen und/oder einem druckbasierten Energiepotential, welches jeweils in der Elektrolyseanlage vorhanden ist, gespeist.

Das elektrische Energiepotential kann als sog. Restpotential in einem Gleichrichter bzw. in dessen kapazitiven Komponenten oder in anderen kapazitiven elektrischen Bauelementen der Elektrolyseanlage enthalten sein. Das druckbasierte Energiepotential kann in einem druckbeaufschlagten Arbeitsgas bzw. Arbeitsgasgemisch der Anlage enthalten sein. Vorteilhafterweise kann so eine länger anhaltende unterbrechungsfreie Stromversorgung der Elektrolyseanlage erreicht werden. Außerdem von Vorteil wird so ein von dem elektrischen und/oder druckbasierten Energiepotential ausgehendes Gefährdungspotential minimiert und folglich eine erhöhte Sicherheit für das Bedienpersonal, die Umwelt und die Elektrolyseanlage selbst erzielt.

Gemäß einer bevorzugten Weiterbildung wird zunächst ein elektro-chemisches Energiepotential, nachfolgend ein elektrisches Energiepotential und abschließend eine druckbasiertes Energiepotential abgebaut.

Beispielsweise kann zunächst das in dem Wasserstoff-Wasser-Gemisch enthaltene Energiepotential, nachfolgend das Energiepotential der kapazitiven elektrischen Bauelemente der Elektrolyseanlage und abschließend das druckbasierte Energiepotential des Sauerstoffs abgebaut werden. Denkbar ist allerdings auch eine davon abweichende, vorgebbare Reihenfolge des Potentialabbaus. So kann auf einfache Weise ein nach den Höhen der von den verschiedenartigen Energiepotentialen ausgehenden Gefährdungspotentiale gestaffelter Abbau des gesamten Energiepotentials erreicht und gezielt eine gefährdungsfreier Zustand der Elektrolyseanlage erreicht werden.

In einer vorteilhaften Weiterbildung wird die Ersatzstromversorgung zumindest zeitweise aus einem druckbasierten Energiepotential, welches in einem Elektrolysestack der Elektrolyseanlage vorhanden ist, gespeist, wobei das druckbasierte Energiepotential mittels einer Turbineneinheit zur Ersatzstromversorgung und zum Abbau des Energiepotentials in elektrische Energie gewandelt wird.

Das druckbasierte Energiepotential kann alternativ oder zusätzlich auch in einem Druckbehälter der Anlage vorhanden sein. Die Turbineneinheit kann eine Turbine und einen Generator aufweisen. Turbinen und Generatoren sind vielfach erprobte und eingesetzte technische Mittel. Auf diese Weise kann eine technisch einfach realisierbare und zuverlässige Wandlung des druckbasierten Energiepotentials in elektrische Energie zur Speisung der Ersatzstromversorgung erzielt werden.

In einer vorteilhaften Ausführungsform wird die Ersatzstromversorgung zumindest zeitweise aus einem elektrischen Energiepotential einer Gleichrichtereinheit der Elektrolyseanlage gespeist, wobei die Gleichrichtereinheit zumindest zeitweise als Energiequelle zur Ersatzstromversorgung und zum Abbau des

Energiepotentials betrieben wird.

Das elektrische Energiepotential kann alternativ oder zusätzlich in beliebigen kapazitiven elektrischen Bauelementen der Elektrolyseanlage vorhanden sein. Insbesondere von Vorteil kann so ein nach dem Ausfall der Stromversorgung vom Gleichrichter der Elektrolyseanlage ausgehendes Gefährdungspotential gezielt abgebaut werden.

Zweckmäßigerweise wird das in der Elektrolyseanlage vorhandenen Energiepotential innerhalb von 1min bis 20min, insbesondere innerhalb von 2min bis 15min, bevorzugt innerhalb von 6min bis 8min, auf ein gefährdungsfreies Niveau abgebaut.

Durch den Abbau des Energiepotentials innerhalb von 1min bis 20min, beispielsweise innerhalb von 2min, kann eine besonders zeitnahe Verringerung des einhergehenden Gefährdungspotentials bei wenig lange andauernder Stromversorgung der Elektrolyseanlage erreicht werden. Durch den Abbau des Energiepotentials innerhalb von 2min bis 15min, beispielsweise innerhalb von 5min, kann eine zeitnahe Verringerung des einhergehenden Gefährdungspotentials bei moderat lange andauernder Stromversorgung der Elektrolyseanlage erreicht werden. Durch den Abbau des Energiepotentials innerhalb von 6min bis 8min, beispielsweise innerhalb von 7min, kann eine hinreichend zeitnahe Verringerung des einhergehenden Gefährdungspotentials bei besonders lange andauernder unterbrechungsfreier Stromversorgung der Elektrolyseanlage erreicht werden. Von Vorteil kann so zum einen eine hinreichend zügige Verringerung des Energiepotentials auf ein gefährdungsfreies Niveau erreicht, zum anderen eine hinreichend lange andauernde unterbrechungsfreie Stromversorgung der Elektrolyseanlage bereitgestellt werden.

Vorteilhafterweise wird das gefährdungsfreie Niveau des Energiepotentials in einem spannungs- und/oder strom- und/oder überdrucklosen und/oder reaktionsgasfreien Betriebszustand der Elektrolyseanlage erreicht.

Von besonderem Vorteil wird so eine Verringerung einer Explosionsgefahr, einer Kurzschlussgefahr und einer Berstgefahr erreicht. Außerdem von Vorteil kann so eine für das Bedienpersonal und die Umwelt gefährdungsfreie Wiederinbetriebnahme der Elektrolyseanlage nach Abbau des Energiepotentials und Wiedereinsetzen der Stromversorgung erreicht werden.

In einer vorteilhaften Weiterbildung wird die Elektrolyseanlage nach dem Abbau des in der Elektrolyseanlage vorhandenen Energiepotentials mittels einer kapazitiven Energiespeichereinheit unterbrechungsfrei mit Strom versorgt.

Von besonderem Vorteil kann so eine zeitliche Verlängerung der unterbrechungsfreien Stromversorgung - über den Abbau des in der Elektrolyseanlage vorhandenen Energiepotentials hinaus - erzielt werden. Dies ist insbesondere dann von Vorteil, wenn das in der Elektrolyseanlage vorhandene Energiepotential für eine hinreichend lang andauernde unterbrechungsfreie Energieversorgung nicht ausreichend ist. Weiterhin sind kapazitive Energiespeichereinheiten zur unterbrechungsfreien Stromversorgung vielfach erprobt und kostengünstig, so dass eine zuverlässige und aufwandsgünstige zeitlich verlängerte unterbrechungsfreie Stromversorgung erreicht wird.

Gemäß einer bevorzugten Ausgestaltung wird eine unterbrechungsfreie Stromversorgung zumindest eines Verbrauchers der Elektrolyseanlage bewirkt.

Zweckmäßigerweise ist der Verbraucher ein sicherheitsrelevanter Verbraucher, beispielsweise ein elektrisch betätigtes Ventil oder ein Pumpe, welcher zum kontrollierten Weiterbetrieb bzw. zur kontrollierten Außerbetriebnahme der Elektrolyseanlage notwendig ist. Vorteilhafterweise wird die Stromversorgung im gegebenen Zusammenhang in dem Sinne unterbrechungsfrei bewirkt, dass der Verbraucher keine betriebs- oder sicherheitstechnisch relevante Unterbrechung der Stromversorgung erfährt.

In einer vorteilhaften Weiterbildung wird das Verfahren zu einer Steuerung des Abbaus des in der Elektrolyseanlage vorhandenen Energiepotentials auf ein gefährdungsfreies Niveau verwendet.

Von Vorteil kann so beispielweise ein steuernder Eingriff von Bedienpersonal in den Ablauf des Abbaus des Energiepotentials erreicht werden.

Gemäß einer bevorzugten Weiterbildung ist die Steuereinheit zu einer Ansteuerung von zumindest einem Verbraucher der Elektrolyseanlage zu einer Stromaufnahme aus einem elektro-chemischen Energiepotential des Elektrolysestacks vorbereitet.

Zweckmäßigerweise ist das elektro-chemische Energiepotential in dem an einer Elektrode oder einer Polymerelektrolytmembran des Elektrolysestacks anliegenden Wasserstoff-Wasser-Gemisch vorhanden. Von Vorteil kann durch die derartige Ansteuerung ein Abfließen eines infolge einer elektro-chemischen Reaktion innerhalb des Elektrolysestacks generierten Stromes erzielt werden.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren sowie der erfindungsgemäßen Anordnung gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine schematische Darstellung einer Elektrolyseanlage mit einer unterbrechungsfreien Stromversorgung aus einem in der Elektrolyseanlage vorhandenen Energiepotential und
- FIG 2: ein Diagramm mit schematischen Spannungsverläufen und Betriebszuständen der Elektrolyseanlage gemäß FIG 1.

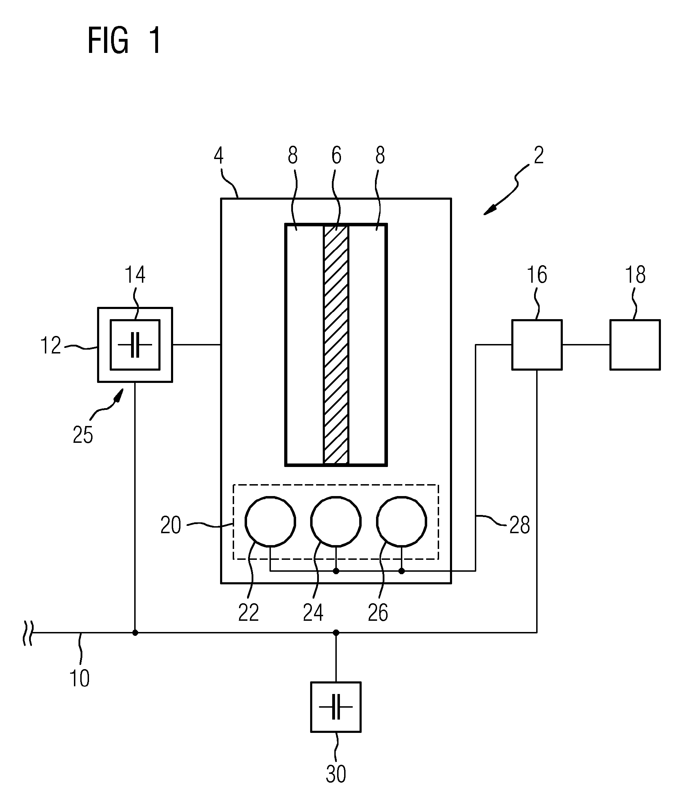

FIG 1 zeigt eine schematische Darstellung einer Elektrolyseanlage 2. Die Elektrolyseanlage weist einen Elektrolysestack 4 (auch: Elektrolysezelle) mit einer Polymerelektrolytmembran 6 und Elektroden 8 auf. Aus Gründen der besseren Darstellbarkeit ist lediglich eine Elektrolysezelle bzw. ein Elektrolysestack dargestellt, unbeschadet der Tatsache, dass Elektrolyseanlagen üblicherweise eine Vielzahl von Elektrolysestacks aufweisen können. Außerdem weist die Elektrolyseanlage 2 eine Stromversorgung 10 auf. Die Stromversorgung 10 kann beispielsweise über eine Zuleitung aus einem Wechselstromnetz erfolgen. Die Stromversorgung 10 ist an eine Gleichrichtereinheit 12, welche ein kapazitives Bauelement 14 aufweist, angeschlossen. Die Gleichrichtereinheit 12 ist zur Versorgung des Elektrolysestacks 4 mit Gleichstrom vorbereitet. Weiterhin ist die Stromversorgung 10 zumindest an einen Verbraucher 16 der Elektrolyseanlage 2 angeschlossen. Zur besseren Darstellbarkeit ist im vorliegenden Ausführungsbeispiel lediglich ein generischer Verbraucher 16 ausgeführt. Typischerweise ist die Stromversorgung 10 an mehrere Verbraucher angeschlossen, die beispielsweise als Pumpen, Ventile, Aggregate oder Anzeigeelemente ausgeführt sind. Der Verbraucher 16 ist zur Ansteuerung durch eine Steuereinheit 18 vorbereitet.

Während eines üblichen Betriebes der Elektrolyseanlage 2 erfolgt die Versorgung des Elektrolysestacks 4 und des Verbrauchers 16 bzw. der gesamten Elektrolyseanlage 2 mit Betriebsenergie über die Stromversorgung 10.

Der Elektrolysestack 4 wird durch die Gleichrichtereinheit 12 mit Gleichstrom bzw. -spannung versorgt. In dem Elektrolysestack 4 wird Wasser unter Einwirkung des Gleichstroms durch eine elektro-chemische Reaktion an der Polymerelektrolytmembran 6 und den Elektroden 8 in Wasserstoff und Sauerstoff aufgespaltet. Der Wasserstoff kann hiernach als Energieträger oder reaktives Zwischenprodukt verwendet werden. Der Sauerstoff kann in eine Umgebung abgegeben oder einem Druckbehälter zugeführt werden. Typischerweise entstehen durch die aggregatszustandsbedingte Expansion des Reaktionsmediums Wasser nicht unerhebliche Drücke im Bereich zwischen 30bar und 50bar innerhalb des Elektrolysestacks 4.

Während des üblichen Betriebes erfolgt außerdem die Versorgung des Verbrauchers 16 durch die Stromversorgung 10. Der Verbraucher kann ein sicherheitsrelevanter Verbraucher, beispielsweise ein elektrische betätigtes Überdruckventil oder eine Kühleinrichtung zur Vermeidung einer Überhitzung der Elektrolyseanlage 2 sein. Während des üblichen Betriebes wird die sicherheitsrelevante Funktion des Verbrauchers 16 durch die Stromversorgung 10 aufrechterhalten.

Insbesondere nach einem Ausfall der Stromversorgung 10 weist der Elektrolysestack 4 der Elektrolyseanlage 2 ein Energiepotential 20 auf. Das Energiepotential 20 setzt sich aus verschiedenartigen Anteilen, nämlich einem elektro-chemischen Energiepotential 22, einem elektrischen Energiepotential 24 und einem druckbasierten Energiepotential 26 zusammen.

Das druckbasierte Energiepotential 26 kann in einem druckbeaufschlagten Arbeitsmedium des Elektrolysestacks 4 liegen, vorzugsweise in Sauerstoff mit einem Druck zwischen 30bar und 50bar und einem Volumen von 10cm³ bis 100 000cm³. Das druckbasierte Energiepotential 26 stellt insbesondere nach einem Ausfall der Stromversorgung ein Gefährdungsrisiko für die Umwelt, die Elektrolyseanlage 2 selbst und deren Bedienpersonal da.

Das elektrische Energiepotential 24 ergibt sich insbesondere aus einer Doppelschichtkapazität bzw. einer Elektrodenrestenergie. Insbesondere nach einem Ausfall der Stromversorgung 10 stellt das elektrische Energiepotential 24 ein Gefährdungsrisiko für die Umwelt, die Elektrolyseanlage 2 selbst und deren Bedienpersonal da. Beispielsweise kann Bedienpersonal unter Einwirkung des elektrischen Energiepotentials 24 einen Stromschlag und infolgedessen körperliche Einbußen erleiden.

Das elektro-chemische Energiepotential 22 liegt in einer Reaktionsfähigkeit eines an den Elektroden 8 bzw. der Polymerelektrolytmembran 6 anliegenden Wasser-Wasserstoff-Gemischs. Im Zusammenwirken mit einer katalytischen Wirkung der Elektroden 8 bzw. mit speziellen Eigenschaften der Polymerelektrolytmembran 6 zerfällt das Wasser-Wasserstoff-Gemisch -bei nicht vorhandener Stromversorgung durch die Gleichrichtereinheit 12- in Wasser und frei werdende Ladungsträger. Sofern ein Abfließen der freiwerdenden Ladungsträger möglich ist fließt ein elektrischer Strom, der bevorzugt zur Speisung der unterbrechungsfreien Stromversorgung der Elektrolyseanlage verwendet wird. Insbesondere nach Ausfall der Stromversorgung 10 stellt das elektro-chemische Energiepotential 22 bzw. das Wasser-Wasserstoff-Gemisch auf Grund seiner Explosionsgefährlichkeit ein nicht unerhebliches Gefährdungspotential dar.

Nach Ausfall der Stromversorgung 10 wird die Elektrolyseanlage 2 ersatzweise und bevorzugt unterbrechungsfrei aus dem Energiepotential 20 mit Strom versorgt. Aus Gründen der übersichtlichen Darstellbarkeit ist im vorliegenden Ausführungsbeispiel lediglich der Verbraucher 16 an die über eine Stromzuleitung 28 aus dem Energiepotential 20 gespeiste Ersatzstromversorgung angeschlossen, obschon Elektrolyseanlagen üblicherweise über eine Vielzahl von Verbrauchern verfügen können.

Außerdem kann ein weiteres elektrisches Energiepotential 25 in kapazitiven elektrischen Bauelementen der Elektrolyseanlage vorhanden sein. Stellvertretend ist in der vorliegenden Figur lediglich das kapazitive Bauelement 14 der Gleichrichtereinheit 12 dargestellt, obwohl die Elektrolyseanlage eine Vielzahl kapazitiver Bauelemente aufweisen kann.

Zur Aufnahme des Stromes aus der Stromzuleitung 28 der ersatzweisen und bevorzugt unterbrechungsfreien Stromversorgung wird der Verbraucher 16 über die Steuereinheit 18 angesteuert. Auf diese Weise wird sichergestellt, dass das im Elektrolysestack 4 vorhandene Energiepotential 20 abgebaut wird.

Die Speisung der Stromzuleitung 28 der ersatzweisen und bevorzugt unterbrechungsfreien Stromversorgung erfolgt bis zur Aufzehrung des Energiepotentials 20. Dabei kann die Stromzuleitung 28 der unterbrechungsfreie Stromversorgung gleichzeitig aus den benannten verschiedenartigen Energiepotentialen 22, 24 und 26 oder in einer vorgebbaren Reihenfolge aus diesen gespeist werden. Auf diese Weise wird zum einen erreicht, dass das mit dem Energiepotential einhergehende Gefährdungspotential kontrolliert abgebaut wird. Zum anderen wird eine etwaige sicherheitsrelevante Funktion des Verbrauchers 16 aufrechterhalten um einen kontrollierten Weiterbetrieb bzw. eine kontrollierte Außerbetriebnahme der Elektrolyseanlage 2 zu erreichen.

Nach Erschöpfung des Energiepotentials 20 erfolgt die weitergehende Stromversorgung des Verbrauchers 16 aus einer kapazitiven Energiespeichereinheit 30. Auf diese Weise wird erreicht, dass auch bei einer vorzeitigen Erschöpfung des Energiepotentials 20 genügend Energie zur Versorgung des sicherheitsrelevanten Verbrauchers 16 zur Verfügung steht. Von besonderem Vorteil kann die kapazitiven Energiespeichereinheit 30 wesentlich leistungsschwächer und damit wesentlich kostengünstiger bemessen werden als üblich. Alternativ oder zusätzlich kann die Stromversorgung auch über ein in dem kapazitiven Bauelement 14 der Gleichrichtereinheit 12 vorhandenes elektrisches Energiepotential 25 erfolgen.

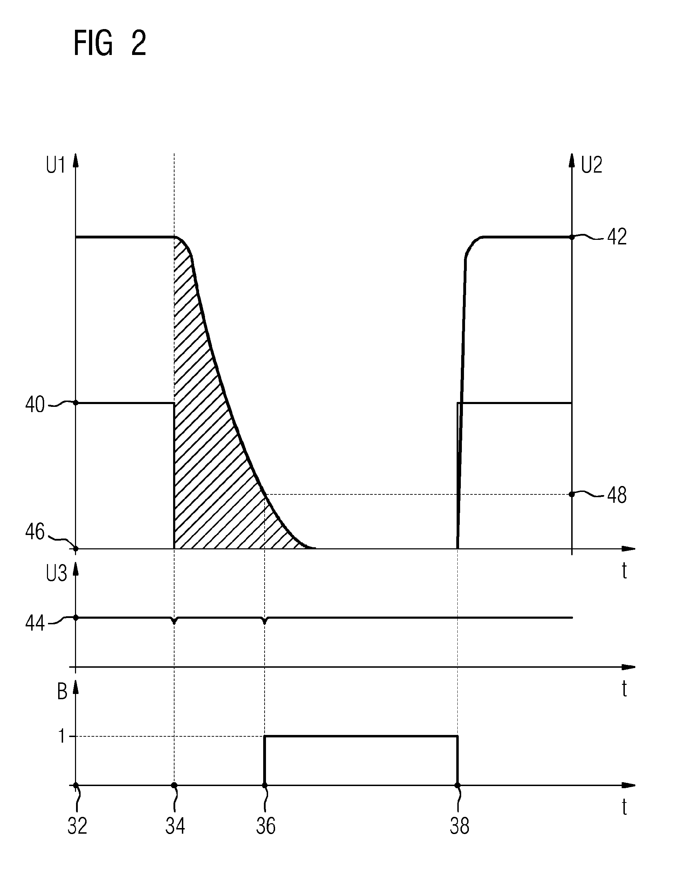

FIG 2 zeigt ein Diagramm mit einem Verlauf einer elektrischen Spannung U1 (linke Ordinate [V]) der Stromversorgung 10 (vgl. FIG 1) und einer elektrischen Spannung U2 (rechte Ordinate [V]) des Elektrolysestacks 4 (vgl. FIG 1) jeweils über der Zeit t (Abszisse [s]). Zudem sind korrespondierende Verläufe einer Spannung U3 (Ordinate [V]) des Verbrauchers 16 (vgl. FIG 1) und einer Betriebsaktivität B (Ordinate [-] der kapazitiven Energiespeichereinheit 30 (vgl. FIG 1), jeweils über der Zeit t dargestellt, wobei die drei dargestellten Zeitachsen identisch sind. Das Diagramm enthält Informationen bezüglich des Abbaus des Energiepotentials 20 bzw. insbesondere des elektro-chemischen Energiepotentials 22 über der Zeit. Darüber hinaus verdeutlicht es die Realisierung einer im technischen Sinne unterbrechungsfreien Stromversorgung des Verbrauchers 16 bzw. der Elektrolyseanlage 2.

Zu einen Zeitpunkt 32 befindet sich die Elektrolyseanlage 2 in einem üblichen Betrieb. D.h. die Stromversorgung 10 weist einen Spannungswert 40, der Elektrolysestack 4 weist einen Spannungswert 42, der Verbraucher 16 weist einen Spannungswert 44 und die Energiespeichereinheit 30 weist keine Betriebsaktivität auf (außer Betrieb B=0).

Ausgehend von oben beschriebenem Zustand findet zum Zeitpunkt 34 ein Ausfall der Stromversorgung 10 statt. Die Spannung U1 fällt infolgedessen auf den Spannungswert 46 bzw. U1=0. Die Stromversorgung des Verbrauchers wird vom Zeitpunkt 34 an aus dem im Elektrolysestack 4 vorhandenen elektro-chemischen Energiepotential 22 aufrechterhalten. Infolgedessen kommt es lediglich zu einer technisch nicht relevanten Beeinträchtigung des Spannungswertes 44 des Verbrauchers 16 zum Zeitpunkt 34. D.h. die Stromversorgung des Verbrauchers 16 wird nach dem Ausfall der Stromversorgung 10 in technischem Sinne unterbrechungsfrei weitergeführt. Denkbar wäre auch, die Stromversorgung des Verbrauchers 16 durch das Energiepotential 22 bewusst zeitlich unterbrochen, beispielsweise mit einer Versorgungslücke von 1s bis 100s, vorzunehmen. Das zur Speisung des Verbrauchers zur Verfügung stehende bzw. aufgezehrte Energiepotential wird näherungsweise durch die schraffierte Fläche in FIG 2 repräsentiert.

Die Stromversorgung des Verbrauchers 16 aus dem im Elektrolysestack 4 enthaltenen elektro-chemischen Energiepotential 22 wird bis zum Zeitpunkt 36 weitergeführt. Zu diesem Zeitpunkt ist die Spannung U2 des Elektrolysestacks 4 bis auf den Spannungswert 48 gesunken. Das vorhandene Energiepotential ist für eine weitere Speisung des Verbrauchers 16 bzw. für ein Aufrechterhalten der Spannung U3 nicht mehr hinreichend, so dass die kapazitive Energiespeichereinheit 30 in Betrieb genommen wird (B=1). Die Stromversorgung des Verbrauchers wird vom Zeitpunkt 36 an durch die kapazitive Energiespeichereinheit 30 aufrechterhalten, so dass es lediglich zu einer technisch nicht relevanten Beeinträchtigung des Spannungswertes 44 des Verbrauchers 16 zum Zeitpunkt 36 kommt.

Zum Zeitpunkt 38 kommt es zu einem Wiedereinsetzen der Stromversorgung 10 und die Spannung U1 steigt infolgedessen auf den Spannungswert 40. Die Versorgung der Verbrauchers 16 mit Betriebsenergie erfolgt wiederum über die Stromversorgung 10, die Betriebsaktivität B der kapazitiven Energiespeichereinheit 30 wird eingestellt (B=0) und die Spannung U2 der Elektrolysestacks 4 steigt auf den ursprünglichen Spannungswert 42.

## Patentansprüche

1. Verfahren zur unterbrechungsfreien Stromversorgung einer Elektrolyseanlage (2) nach einem Ausfall einer Stromversorgung (10), **dadurch gekennzeichnet, dass**
- die Elektrolyseanlage (2) nach dem Ausfall der Stromversorgung (10) aus einem in der Elektrolyseanlage (2) vorhandenen Energiepotential (20) ersatzweise mit Strom versorgt wird,
- wobei das in der Elektrolyseanlage (2) vorhandene Energiepotential (20) kontrolliert abgebaut wird.

2. Verfahren nach Anspruch 1, **dadurch gekenn zeichnet**, dass
- die Ersatzstromversorgung zumindest zeitweise aus einem elektro-chemischen Energiepotential (22), welches in einem Elektrolysestack (4) der Elektrolyseanlage (2) vorhanden ist, gespeist wird, wobei
- der Elektrolysestack (4) zumindest zeitweise als Brennstoffzelle zur Ersatzstromversorgung und zum Abbau des Energiepotentials (20, 22) betrieben wird.

3. Verfahren nach einem der vorherigen Ansprüche, **dadurch gekennzeichnet, dass** die Ersatzstromversorgung zumindest zeitweise aus einem elektrischen (24) und/oder einem druckbasierten Energiepotential (26), welches jeweils in der Elektrolyseanlage (2) vorhanden ist, gespeist wird.

4. Verfahren nach einem der vorherigen Ansprüche, **dadur ch gekennzeichnet**, dass zum kontrollierten Abbau des in der Elektrolyseanlage (2) vorhandenen Energiepotentials (20)
- zunächst ein elektro-chemisches Energiepotential (22),
- nachfolgend ein elektrisches Energiepotential (24, 25) und
- abschließend eine druckbasiertes Energiepotential (26) abgebaut werden.

5. Verfahren nach einem der vorherigen Ansprüche, **dadurch gekennzeichnet, dass**
- die Ersatzstromversorgung zumindest zeitweise aus einem druckbasierten Energiepotential (26), welches in einem Elektrolysestack (4) der Elektrolyseanlage (2) vorhanden ist, gespeist wird, wobei
- das druckbasierte Energiepotential (26) mittels einer Turbineneinheit zur Ersatzstromversorgung und zum Abbau des Energiepotentials (20, 26) in elektrische Energie gewandelt wird.

6. Verfahren nach einem der vorherigen Ansprüche, **dadurch gekennzeichnet, dass**
- die Ersatzstromversorgung zumindest zeitweise aus einem elektrischen Energiepotential (25) einer Gleichrichtereinheit (12) der Elektrolyseanlage gespeist (2) wird, wobei
- die Gleichrichtereinheit (12) zumindest zeitweise als Energiequelle zur Ersatzstromversorgung und zum Abbau des Energiepotentials (25) betrieben wird.

7. Verfahren nach einem der vorherigen Ansprüche, **dadurch gekennzeichnet, dass** das in der Elektrolyseanlage (2) vorhandenen Energiepotential (20-26) innerhalb von 1min bis 20min, insbesondere innerhalb von 2min bis 15min, bevorzugt innerhalb von 6min bis 8min, auf ein gefährdungsfreies Niveau abgebaut wird.

8. Verfahren nach Anspruch 7, **dadurch gekennzeichnet, dass** das gefährdungsfreie Niveau des Energiepotentials (20-26) in einem spannungs- und/oder strom- und/oder überdrucklosen und/oder reaktionsgasfreien Betriebszustand der Elektrolyseanlage (2) erreicht wird.

9. Verfahren nach einem der vorherigen Ansprüche, **dadurch gekennzeichnet, dass** die Elektrolyseanlage (2) nach dem Abbau des in der Elektrolyseanlage vorhandenen Energiepotentials (20-26) mittels einer kapazitiven Energiespeichereinheit (30) unterbrechungsfrei mit Strom versorgt wird.

10. Verfahren nach einem der vorherigen Ansprüche, **dadurch gekennzeichnet, dass** eine unterbrechungsfreie Stromversorgung zumindest eines Verbrauchers (16) der Elektrolyseanlage (2) bewirkt wird.

11. Verfahren nach einem der vorherigen Ansprüche, verwendet zu einer Steuerung des Abbaus des in der Elektrolyseanlage (2) vorhandenen Energiepotentials (20-26) auf ein gefährdungsfreies Niveau.

12. Elektrolyseanlage (2) mit einem Elektrolysestack (4), **gekennzeichnet durch** eine Steuereinheit (18), eingerichtet zu einer Ansteuerung von zumindest einem Verbraucher (16) der Elektrolyseanlage (2) zu einer Stromaufnahme aus einem Energiepotential (20-26) der Elektrolyseanlage (2).

13. Elektrolyseanlage (2) nach Anspruch 12, **dadurch gekennzeichnet, dass** die Steuereinheit (18) zu einer Ansteuerung von zumindest einem Verbraucher (16) der Elektrolyseanlage (2) zu einer Stromaufnahme aus einem elektro-chemischen Energiepotential (22) des Elektrolysestacks (4) vorbereitet ist.
